Europäisches Patentamt

European Patent Office

Office européen des brevets

(19)

(11) Publication number: **0 241 115**
**A2**

# (12) EUROPEAN PATENT APPLICATION

(21) Application number: **87301089.6**

(22) Date of filing: **09.02.87**

(51) Int. Cl.⁴: **C07F 9/42**

| | |
|---|---|
| The title of the invention has been amended (Guidelines for Examination in the EPO, A-III, 7.3). | (71) Applicant: **VICKERS PLC**<br>**Vickers House Millbank Tower Millbank**<br>**London SW1P 4RA(GB)** |
| (30) Priority: **13.02.86 GB 8603549** | (72) Inventor: **Etherington, Terence**<br>**50 Belle Vue Avenue**<br>**Roundhay Leeds LS8 2NN(GB)** |
| (43) Date of publication of application:<br>**14.10.87 Bulletin 87/42** | (74) Representative: **Overbury, Richard Douglas et al**<br>**HASELTINE LAKE & CO Hazlitt House 28** |
| (84) Designated Contracting States:<br>**AT BE CH DE ES FR GB IT LI LU NL SE** | **Southampton Buildings Chancery Lane**<br>**London WC2A 1AT(GB)** |

(54) **Process for producing unsaturated phosphonic acid dichlorides.**

(57) Unsaturated phosphonic acid dichlorides are produced by dehydrohalogenating halogeno-alkane phosphonic acid dichlorides in the presence of a catalyst at a temperature of from 100 to 165°C under partial vacuum.

EP 0 241 115 A2

## Improvments in or relating to phosphonic acid derivatives

This invention relates to the preparation of phophonic acid derivatives and more particularly to the preparation of unsaturated phosphonic acid dichlorides from halogeno-alkane phosphonic acid dichlorides.

Unsaturated phosphonic acid dichlorides may be prepared by reacting a suitable unsaturated phosphonic acid or ester with phosphorus pentachloride or thionyl chloride. Commercially, however, there are disadvantages in that the chlorides need to be used in excees proportions. In addition, the use of phosphorus pentachloride produces phosphorus oxychloride as a by-product which is difficult to separate from the unsaturated phosphonic acid dichlorides.

An improved process is disclosed in Swiss Patent No. 391699. In this process halogeno-alkane phosphonic acid dichlorides are subject to dehydrohalogenation at temperatures up to 300°C. The high temperatures and relatively long reaction times produce large amounts of by-products which considerably reduce the yield of the desired product.

US Patent No. 3574735 discloses a similar process in which triphenyl phosphine is used as a catalyst. The process may be carried out at 200°C and the reaction velocity is such that the formation of by-products is obviated.

According to one aspect of the present invention, there is provided a process for producing an unsaturated phosphonic acid dichloride by subjecting a halogeno-alkane phosphonic acid dichloride to a dehydrohalogenation reaction at elevated temperature in the presence of a catalyst characterised in that the dehydrohalogenation reaction is carried out at a temperature of 100 - 165°C under a partial vacuum.

The fact that this is possible is surprising in that it is to be expected that the energy requirement for the reaction to take place would only be provided by temperatures in excess of 200°C.

Preferably the reaction temperature is from 140 -150°C.

The process of the invention has certain advantages over the process of US Patent No. 3574735 when commercial, i.e. large scale production, is considered.

Firstly, the energy required to produce a temperature of up to 165°C is considerably less than that required to produce a temperature of 200°C resulting in a cheaper product.

Secondly, a temperature of up to 165°C can be achieved fairly easily by steam heating whereas a temperature of 200°C would require steam at a much higher pressure or a more expensive system such as electric or heated oil.

Thirdly, glass lined vessels can be used whereas at the higher temperature more expensive and less readily available vessels made of corrosion resistant products such as Hastelloy or tantalum would be required.

Finally, the time required to react a large batch (i.e. @ 500 kg) could be of the order of 12 hours. A temperature of 200°C is more likely to produce unwanted by-products during such a lengthy period.

According to a further aspect of the invention, the catalyst used is a Lewis base optionally in admixture with a quaternary ammonium compound.

For example, the Lewis base may be triphenyl phosphine, dibenzyl sulphide, or lithium iodide and the quaternary ammonium compound may be tetramethyl ammonium chloride, benzyl triethyl ammonium chloride or tetrabutyl ammonium bromide. A particularly useful mixture is dibenzyl sulphide and tetramethyl ammonium chloride or tetrabutyl ammonium bromide.

The catalyst is preferably present in an amount of from 0.05% to 2% by weight of the halogeno-alkane phosphonic acid dichloride.

The vacuum may range from 20 to 300 mm Hg.

The unsaturated phosphonic acid dichlorides obtained by the process of the invention can be used in various syntheses. They can by hydrolysed using water, aqueous alkali or acid to the corresponding phosphonic acids or esterified with an alcohol or glycol into the corresponding esters. Such acids and esters can be homopolymerised or copolymerised with further monomers.

The following Examples illustrate the invention:

## Example 1

300 g of 2-chloroethyl phosphonic acid dichloride and 0.6 g triphenyl phosphine were charged into a vessel equipped with a fractionating column suitable for fractional distillation under vacuum. A vacuum ( @ 300 mm Hg) was applied and the temperature of the vessel brought up to 150°C. The vacuum was then adjusted to cause gentle reflux of the ethene phosphonic acid dichloride, which has a boiling point of 120 - 124°C at 140 - 150 mm Hg.

The results are shown in Table 1 as Reaction 1.

## Example 2

Example 1 was repeated using combinations of catalysts. The results are shown in Table 1 as Reactions 2 - 6.

## Example 3

As a comparison, Example 1 was repeated without the vacuum. At 150°C no reaction occurred. The vessel was then heated to 200°C.

The results are shown in Table 1 as Reactions 7 and 8, respectively.

### TABLE 1

| Reaction Number | Catalyst 1 | Catalyst 2 | Initial Reaction Time (hrs) | Yield % | Purity % |
|---|---|---|---|---|---|
| 1 | TPP | -- | 1.5 | 68 | 92.7 |
| 2 | TPP | BTAC | 1.75 | 65 | 97.3 |
| 3 | TPP | TMAC | 2.00 | 81 | 96.4 |
| 4 | TPP | LiI | 2.00 | 75 | 98.0 |
| 5 | DBS | TMAC | 1.00 | 85 | 93.0 |
| 6 | LiI | TMAC | 1.50 | 74 | 97.1 |
| 7 | TPP | -- | No product | | |
| 8 | TPP | -- | 1.50 | 80 | 93.0 |

TPP = Triphenyl phosphine; DBS = Dibenzyl sulphide; LiI = Lithium iodide; BTAC = Benzyl triethyl ammonium chloride; TMAC = Trimethyl ammonium chloride

The initial reaction time is measured from the pot temperature reaching its operating level (150°C in the case of Reactions 1 - 7 and 200°C in the case of Reaction 8) and is the time required to obtain a constant boiling point at the reflux head of the fractionating column. As such it is a measure of the reaction time.

As shown by the results in Table 1, the process of the invention gives comparable yields and reaction times to the previously known process at a temperature which confers considerable commercial advantage.

Example 4

Reaction 5 of Example 2 was repeated using different reaction temperatures and pressures and the results obtained are set out in Table 2.

TABLE 2

| Reaction Number | Reaction Temp (°C) | Vacuum (mm Hg) | Initial Reaction Time (hrs) | Yield % | Purity % |
|---|---|---|---|---|---|
| 9 | 100 | 30 | 3 | 82 | 95 |
| 10 | 120 | 70 | 1.75 | 86 | 92 |
| 11 | 165 | 300 | 0.5 | 85 | 93 |

The vacuum values quoted in the Table are those needed to cause gentle reflux of the ethene phosphonic acid dichloride. The initial vacuum applied during the heating must of course be less (i.e. the pressure is higher). The initial vacuum used in Reaction numbers 9,10 and 11 was @150 mm Hg, @ 150mm Hg and @ 450 mm Hg, respectively and the vacuum was subsequently increased until refluxing occurred at the desired reaction remperature.


Example 5

To a reaction vessel equipped with a packed column and reflux dividing head was charged 4000 g of crude 2-chloroethyl phosphonic acid dichloride together with 8 g of dibenzylsulphide and 8 g of tetrabutyl ammonium bromide. A vacuum of 140 - 160 mm Hg was applied and the stirred mixture heated to 145 ∓ 5°C. After a forerun of phosphorus oxychloride (an impurity present in the starting material) had distilled off (b.p. 60 -65°C) the reflux dividing head was set to total reflux and left that way for approx. 1 hour, by which time the reflux temperature had stabilised at 120 - 122°C. The product was then allowed to distill at a rate such that a reflux temp. range of 121°C∓ 3°C was not exceeded with a vacuum of 150 mm Hg ∓ 10 mm Hg.

The reaction was completed after approx. 5 hours and the following yields were recorded.
First fraction: 320 g POCl impurity.
Second fraction: 2830 g ethene phosphonic acid dichloride of 97% purity.
This second fraction represents a 93% of theory yield.


**Claims**

1. A process for producing an unsaturated phosphonic acid dichloride by subjecting a halogeno-alkane phosphonic acid dichloride to a dehydrohalogenation reaction at elevated temperature in the presence of a catalyst characterised in that the dehydrohalogenation reaction is carried out at a temperature of 100 - 165°C under a partial vacuum.

2. A process according to claim 1 wherein the dehydrohalogenation reaction is carried out at a temperature of 140 - 150°C.

3. A process according to claim 1 or 2 wherein the catalyst is a Lewis base.

4. A process according to claim 3 wherein the Lewis base is triphenyl phosphine, dibenzyl sulphide or lithium iodide.

5. A process according to claim 3 or 4 wherein the Lewis base is used in admixture with a quaternary ammonium compound.

6. A process according to claim 5 wherein the quaternary ammonium compound is tetramethyl ammonium chloride, benzyl triethyl ammonium chloride, or tetrabutyl ammonium bromide.

7. A process according to any one of the preceding claims wherein the catalyst is present in an amount of from 0.05% to 2.00% by weight of the halogeno-alkane phosphonic acid dichloride.

8. A process according to any one of the preceding claims wherein the halogeno-alkane phosphonic acid dichloride is 2-chloroethyl phosphonic acid dichloride.

9. A process according to any one of the preceding claims wherein the vacuum is from 20 mm to 300 mm Hg.